# EUROPÄISCHE PATENTSCHRIFT

(11) **EP 2 435 273 B1**
(45) Veröffentlichungstag und Bekanntmachung des Hinweises auf die Patenterteilung: **16.07.2014**
(21) Anmeldenummer: 10721992.5
(22) Anmeldetag: 14.05.2010
(51) Int. Cl.: B60N 3/10, B60R 7/04

(54) **HALTEVORRICHTUNG, INSBESONDERE FÜR GETRÄNKEBEHÄLTER**
HOLDING DEVICE, PARTICULARLY FOR BEVERAGE CONTAINER
DISPOSITIF DE RETENUE, NOTAMMENT POUR UN RÉCIPIENT À BOISSON

(30) Priorität: 29.05.2009 DE 102009023360
(43) Veröffentlichungstag der Anmeldung: 04.04.2012
(73) Patentinhaber: Volkswagen Aktiengesellschaft, 38440 Wolfsburg (DE)
(72) Erfinder: ADLER, Hans-Joachim, 38518 Gifhorn (DE); REMMERT, Martin, 38551 Ribbesbüttel (DE)
(86) Internationale Anmeldenummer: PCT/EP2010/002970
(87) Internationale Veröffentlichungsnummer: WO 2010/136130

(56) Entgegenhaltungen:
- EP-A2- 1 277 613
- JP-A- 5 050 876
- JP-U- 4 019 327
- JP-U- 57 057 137
- US-A- 5 881 935

## Beschreibung

Die vorliegende Erfindung betrifft eine Haltevorrichtung, insbesondere für Getränkebehälter, die in einem Ablagefach der Innenausstattung eines Kraftfahrzeuges angeordnet ist, gemäß dem Oberbegriff des Patentanspruches 1.

Eine Haltevorrichtung beschreibt die DE 10 2007 006 575 A1, bei der an einer Seitenwand eines in der Draufsicht etwa rechteckförmigen Ablagefaches ein um eine senkrechte Achse schwenkbarer Haltebügel angeordnet ist, der von der Seitenwand weg in eine ein Getränkebehälterfach bildende Gebrauchslage verschwenkbar ist. Vorteilhaft daran ist insbesondere, dass in der Nichtgebrauchslage der Haltebügel an der einen Seitenwand des Ablagefaches anliegt und somit die Ablage auch größerer Gegenstände nicht behindert bzw. die nahezu volle Grundfläche des Ablagefaches freigibt. Das Ablagefach kann in der Mittelkonsole der Innenausstattung des Kraftfahrzeuges oder an anderer geeigneter Stelle vorgesehen sein.

Aus der DE 102 45 740 A1 ist eine weitere Haltevorrichtung für Getränkebehälter im Staufach eines Fahrzeuges bekannt. Die Haltevorrichtung weist ein zwischen einer Gebrauchslage und einer Nichtgebrauchslage schwenkbares Stützelement auf, das an einer Seitenwand des Staufaches angelenkt ist. In der Gebrauchslage ist ein Getränkebehälter zwischen dem Stützelement und einer gegenüberliegenden Staufachwand fixiert.

Aus der EP 1 277 613 A2 ist eine gattungsgemäße Haltevorrichtung für einen Getränkebehälter bekannt. Diese ist in einem Ablagefach der Innenausstattung angeordnet und weist einen schwenkbar gelagerten Haltebügel auf. Der Haltebügel ist zwischen einer Nichtgebrauchslage und einer Gebrauchslage verstellbar, in der der Haltebügel zumindest teilweise ein Getränkebehälterfach begrenzt. Der Haltebügel ist mit horizontal verlaufender Schwenkachse drehbar gelagert. Aus der weiteren US 5 881 935 A ist eine Haltevorrichtung bekannt, die in einem Ablagefach angeordnet ist. Die Haltevorrichtung weist einen in etwa T-förmigen Haltebügel auf, der in Querrichtung des Ablagefaches in etwa mittig angeordnet ist und in der Gebrauchslage zwei voneinander beabstandete Getränkefächer begrenzt. Aus der JP 4 019 327 U ist eine weitere Lagerung einer Schwenkachse eines Haltebügels für einen Getränkehalter bekannt, der an den Seitenwänden des Ablagefaches angelenkt ist. Aus der JP 57 057 137 U und aus der JP 5 050 876 A ist eine weitere, in einem Ablagefach der Innenausstattung eines Kraftfahrzeuges angeordnete Haltevorrichtung bekannt, die einen schwenkbar gelagerten Haltebügel aufweist.

Aufgabe der Erfindung ist es, eine Haltevorrichtung bereitzustellen, bei der eine besonders zuverlässige Alterung der Getränkebehälter bei einfachster Bedienung sichergestellt ist.

Diese Aufgabe wird erfindungsgemäß mit den Merkmalen des Patentanspruches 1 gelöst. Vorteilhafte und besonders zweckmäßige Weiterbildungen der Erfindung sind in den Unteransprüchen angeführt.

Erfindungsgemäß wird vorgeschlagen, dass der Haltebügel an zwei gegenüberliegenden Seitenwänden drehbar gelagert ist, wobei dessen Schwenkachse etwa horizontal verläuft. Der Haltebügel kann derart positioniert sein, dass dieser in der um 180° geschwenkten Nichtgebrauchslage an einer der zwischen den Seitenwänden angeordneten Stirnwände des Ablagefaches im Wesentlichen komplementär anliegt. Damit ist in der Gebrauchslage ein geschlossenes Getränkebehälterfach geschaffen, in dem eine auch für den Fahrbetrieb zuverlässige Aufnahme der Getränkebehälter sichergestellt ist. Das Getränkebehälterfach wird dabei durch einfaches Verschwenken des Haltebügels um 180° um dessen Schwenkachse bereit gestellt.

Insbesondere können die besagte Stirnwand und der Haltebügel mit zumindest je einer Krümmung zur Aufnahme kreissymmetrischer Getränkebehälter oder andere Gegenstände beliebiger Geometrie ausgeführt sein, die in der Nichtgebrauchslage komplementär aneinander anliegen und in der Gebrauchslage die Getränkebehälter (zum Beispiel Becher oder Flaschen, etc.) formschlüssig umschließen.

Gegebenenfalls können dabei zur Aufnahme zweier Getränkebehälter an der Stirnwand und an dem Haltebügel je zwei Krümmungsabschnitte ausgebildet sein, die durch einen planen Zwischenabschnitt unterteilt sind. Der Zwischenabschnitt des Haltebügels kann dabei gegebenenfalls auch federnd nachgiebig ausgeführt sein.

Erfindungsgemäß wird eine Schwenklagerung des Haltebügels mit einer fertigungstechnisch günstigen Steckverbindung erzielt, indem der Haltebügel zwei gegenüberliegende Lagerzapfen aufweist, die in nach oben offene Führungsschlitze in den Seitenwänden eingesetzt sind. Bevorzugt werden die Lagerzapfen mittels an den Seitenwänden angeordneter Schenkelfedern gehalten.

Zusätzlich können in bevorzugter Weise an die Lagerzapfen außerhalb der Seitenwände liegende Nockenscheiben angeformt sein, die mit den Schenkelfedern derart zusammenwirken, dass der Haltebügel unter federnder Vorspannung in der Gebrauchslage und der Nichtgebrauchslage arretiert ist. Damit dienen die Schenkelfedern in einer Doppelfunktion sowohl zur Arretierung des Haltebügels als auch zu dessen Lagesicherung in den Führungsschlitzen der Seitenwände des Ablagefaches.

Dabei können des Weiteren in einer baulich besonders einfachen Ausführung die Nockenscheiben der Lagerzapfen jeweils zwei diametral gegenüberliegende Vorsprünge aufweisen, die mit korrespondierenden Vertiefungen in den die Nockenscheiben umfassenden Schenkeln der Schenkelfedern zusammenwirken.

Schließlich können in besonders montagegünstiger Weise die im Wesentlichen V-förmigen Schenkelfedern an ihrem Basisabschnitt jeweils auf an die Seitenwände unterhalb der Führungsschlitze angeformte, die Schenkelfedern relativ zu den Führungsschlitzen positionierende Vorsprünge aufgesteckt sein.

Ein Ausführungsbeispiel der Erfindung ist im Folgenden anhand der beiliegenden Zeichnung näher erläutert. Es zeigen:
- Fig. 1: eine Draufsicht auf ein in einer Mittelkonsole eines Kraftfahrzeuges angeordnetes Ablagefach mit einem um 180° schwenkbaren Haltebügel zur Bildung eines Getränkebehälterfaches in der Nichtgebrauchsstellung;
- Fig. 2: das Ablagefach gemäß Fig. 1 mit in der Gebrauchsstellung befindlichem Haltebügel;
- Fig. 3: den Haltebügel nach den Fig. 1 und 2 in raumbildlicher Darstellung;
- Fig. 4: das Ablagefach als Einzelheit in einer raumbildlichen Darstellung von vorne oben; und
- Fig. 5: in vergrößerter Darstellung eine Ansicht gemäß Pfeil X der Fig. 4 auf eine Seitenwand des Ablagefaches im Bereich der Lagerung und Arretierung des schwenkbaren Haltebügels mittels einer Schenkelfeder.

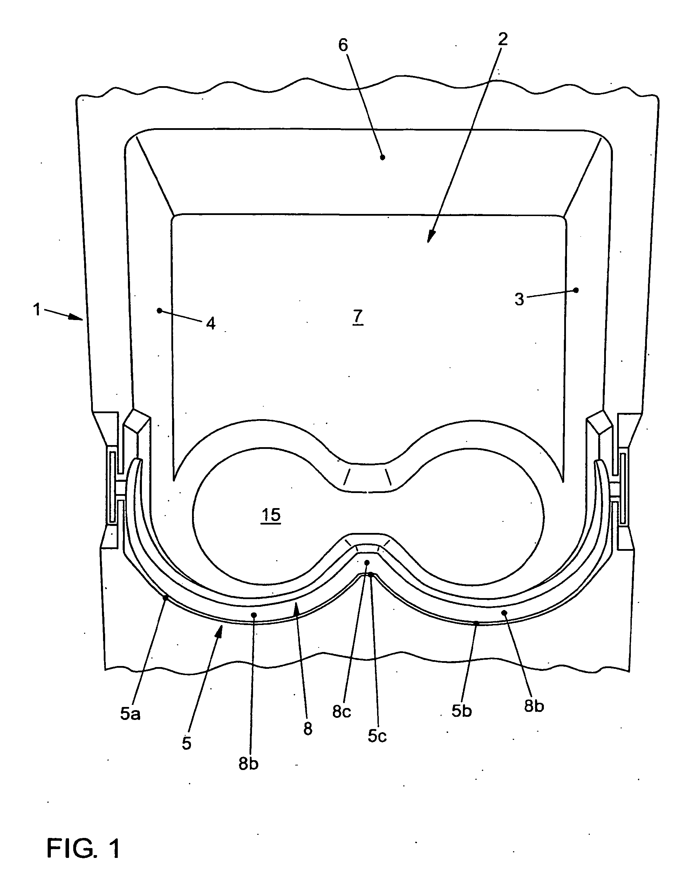

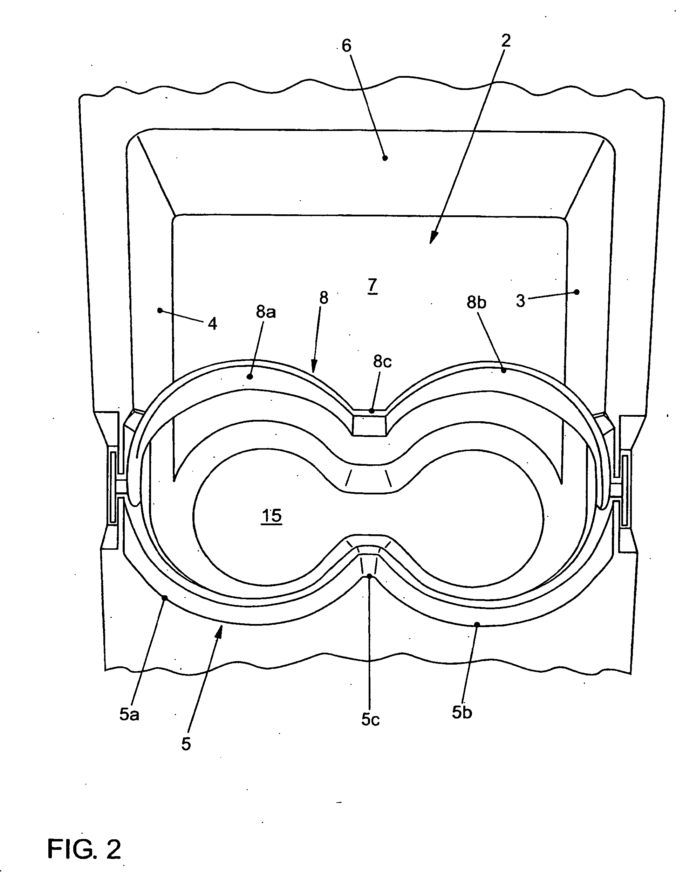

Gemäß den Fig. 1 und 2 ist in einer nur teilweise ersichtlichen Mittelkonsole 1 eines Personenkraftfahrzeuges in eine entsprechende Ausnehmung ein nach oben offenes Ablagefach 2 eingesetzt, das im Wesentlichen zwei Seitenwände 3, 4, zwei Stirnwände 5, 6 und einen Boden 7 aufweist.

Die vordere Stirnwand 5 weist zwei konkave Krümmungsabschnitte 5a, 5b auf, die durch einen planen Zwischenabschnitt 5c unterteilt sind und im Wesentlichen hälftig zwei Getränkebehälterfächer bilden, die (Fig. 2) durch einen komplementär ausgebildeten Haltebügel 8 mit Krümmungsabschnitten 8a, 8b und einem planen Zwischenabschnitt 8c das Getränkebehälterfach entsprechend abschließen.

Der Haltebügel 8 ist in den Seitenwänden 4, 5 des Ablagefaches 2 um 180° von einer Gebrauchslage (Fig. 2) in eine Nichtgebrauchslage (Fig. 1) verschwenkbar gelagert. In der Nichtgebrauchslage liegen dabei, wie aus Fig. 1 ersichtlich ist, die Krümmungsabschnitte 8a, 8b und der plane Zwischenabschnitt 8c komplementär an der Stirnwand 5 des Ablagefaches 2 an, so dass die vollständige Grundfläche (Boden 7) des Ablagefaches 2 zum Ablegen von Gegenständen, zum Beispiel Brillen, Schreibutensilien, etc. zur Verfügung steht.

Durch einfaches Umklappen des Haltebügels 8 um 180° in die Gebrauchsstellung können ein oder zwei Getränkebehälter, zum Beispiel kreissymmetrische Becher oder andere Gegenstände beliebiger Geometrie, Flaschen, etc. lagesicher in das Getränkebehälterfach von oben eingesteckt werden.

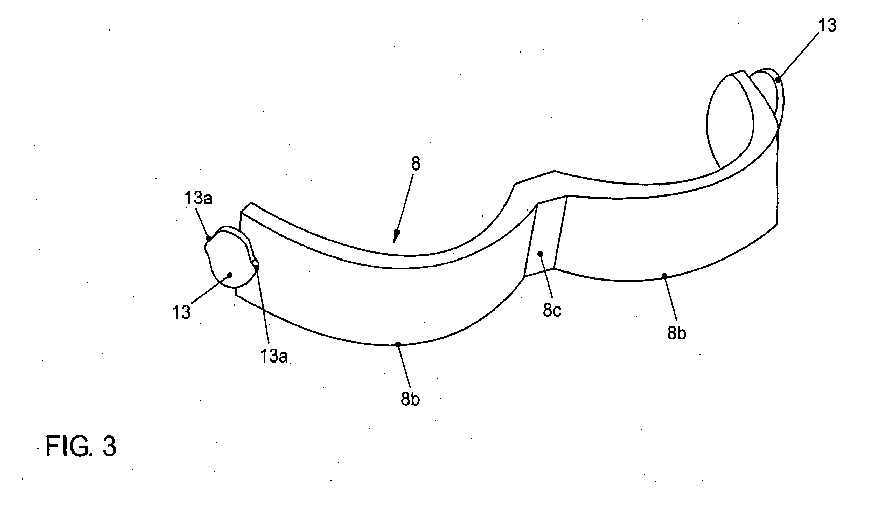

Der Haltebügel 8 ist beiderseits über seitlich angeformte Lagerzapfen 9 (vgl. Fig. 3 bis 5) um eine etwa horizontal verlaufende Schwenkachse 10 in den Seitenwänden 3, 4 schwenkbar gelagert, wobei die Schwenkachse 10 wie ersichtlich ist so positioniert ist, dass der Haltebügel 8 in der Nichtgebrauchslage (Fig. 1) nahezu bündig an der korrespondierenden Stirnwand 5 des Ablagefaches 2 anliegt.

Die Lagerzapfen 9 des Haltebügels 8 können über in materialschwächere bzw. schmälere Abschnitte 3a, 4a der Seitenwände 3, 4 eingebrachte Führungsschlitze 11 von oben eingesteckt werden, wobei sie mit Hilfe von an den Seitenwänden 3, 4 angeordneten, nach oben offenen Schenkelfedern 12 wie nachstehend beschrieben lagegesichert sind.

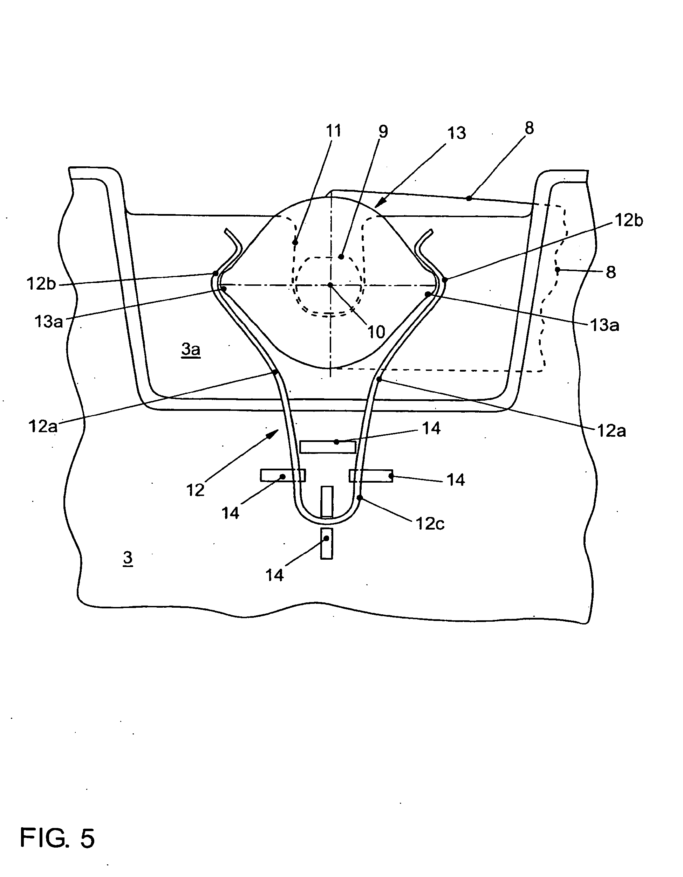

Dazu sind an die Lagerzapfen 9 durchmessergrößere Nockenscheiben 13 angeformt, die von den Schenkeln 12a der unterhalb der Führungsschlitze 11 liegenden Schenkelfedern 12 (vgl. Fig. 5) formschlüssig und kraftschlüssig umfasst sind.

Zur Herstellung einer Arretierung des Haltebügels 8 in der Gebrauchslage und in der Nichtgebrauchslage sind an den Nockenscheiben 13 zwei diametral gegenüberliegende, radial abragende Vorsprünge 13a vorgesehen, die in korrespondierende Vertiefungen 12b in den Schenkeln 12a der Schenkelfedern 12 formschlüssig einragen.

Die Schenkelfedern 12 sind an ihrem U-förmigen Basisabschnitt 12c auf die Seitenwände 3, 4 aufgesteckt, wobei an den Seitenwänden 3, 4 jeweils leistenförmige Vorsprünge 14 angeordnet sind, die die Basisabschnitte 12c form- und kraftschlüssig halten.

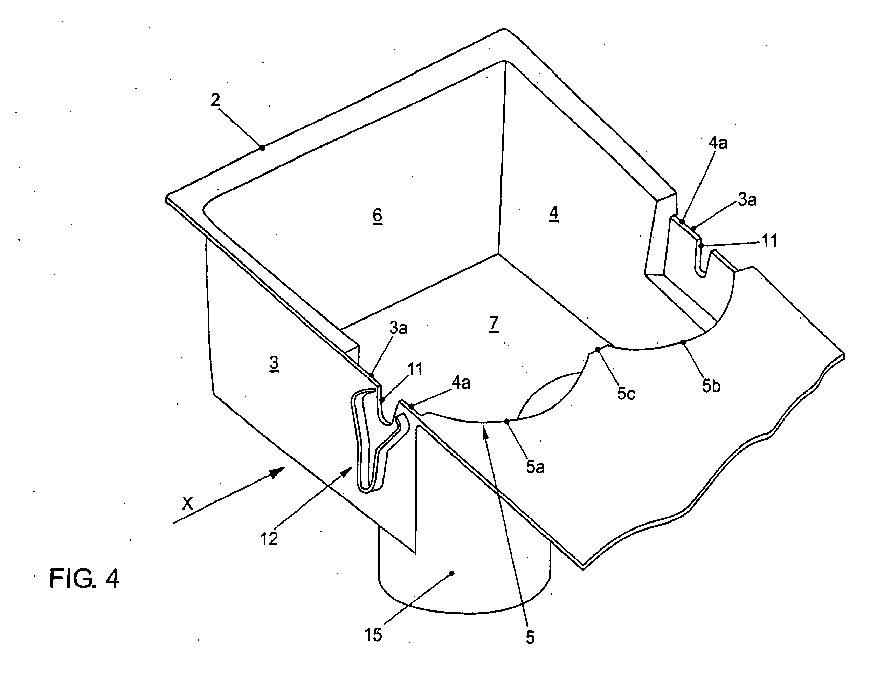

Zur Montage des Haltebügels 8 an den Seitenwänden 3, 4 des Ablagefaches 2 werden zunächst die Schenkelfedern 12 aufgesteckt (vgl. Fig. 4). Sodann wird der Haltebügel 8 mit seinen Lagerzapfen 9 in die Führungsschlitze 11 eingesteckt, bis die Nockenscheiben 13 in die Schenkelfedern 12 unter federnder Vorspannung eingerastet sind. Die Schenkelfedern 12 bilden dabei sowohl die Lagesicherung des Haltebügels 8 in den Führungsschlitzen 11 nach oben als auch die federnd nachgiebige Arretierung des Haltebügels 8 in der Gebrauchslage und in der Nichtgebrauchslage.

Die Erfindung ist nicht auf das beschriebene Ausführungsbeispiel beschränkt. Insbesondere können der Haltebügel 8 und die korrespondierende Stirnwand 5 auch nur für einen Getränkebehälter entsprechend ausgelegt sein.

Der Haltebügel 8 kann gegebenenfalls nur als schmaler Steg ausgeführt sein, der sich in der Nichtgebrauchslage in eine komplementäre Ausnehmung in der Stirnwand 5 des Ablagefaches 2 bündig in den weiteren Stirnwandverlauf einfügen lässt.

Gegebenenfalls kann das Getränkebehälterfach durch Einformungen in den Boden 7 des Ablagefaches 2 nach unten erweitert werden, wodurch der Halt der Getränkebehälter noch zusätzlich erhöht werden kann. Beispielhaft ist gemäß den Fig. 1 und 2 sowie der Fig. 4 eine brillenförmige Einformung 15 im Boden 7 des Ablagefaches 2 ausgebildet.

Die nach unten abgestufte Einformung 15 ist in dem ansonsten planar ausgebildeten Boden 7 eingearbeitet. Zusätzlich kann die Einformung 15 mittels einer Formschwelle eingefasst sein. Mittels der Formschwelle ist verhindert, das Gegenstände vom planaren Boden 7 des Ablagefaches 2 versehentlich in die Einformung 15 gelangen.

### Bezugszeichenliste

- 1: Mittelkonsole
- 2: Ablagefach
- 3: Seitenwand
- 3a: schmälerer Abschnitt
- 4: Seitenwand
- 4a: schmälerer Abschnitt
- 5: Stirnwand
- 5a: Krümmungsabschnitt
- 5b: Krümmungsabschnitt
- 5c: planer Zwischenabschnitt
- 6: Stirnwand
- 7: Boden
- 8: Haltebügel
- 8a: Krümmungsabschnitt
- 8b: Krümmungsabschnitt
- 8c: planer Zwischenabschnitt
- 9: Lagerzapfen
- 10: Schwenkachse
- 11: Führungsschlitz
- 12: Schenkelfeder
- 12a: Schenkel
- 12b: Vertiefungen
- 12c: Basisabschnitt
- 13: Nockenscheibe
- 13a: Vorsprünge
- 14: Vorsprünge
- 15: Einformung

## Patentansprüche

1. Haltevorrichtung, insbesondere für Getränkebehälter, die in einem Ablagefach (2) der Innenausstattung eines Kraftfahrzeuges angeordnet ist und die einen schwenkbar gelagerten Haltebügel (8) aufweist, der zwischen einer Nichtgebrauchslage und einer Gebrauchslage verstellbar ist, in der der Haltebügel (8) zumindest teilweise ein Getränkebehälterfach im Ablagefach (2) begrenzt, wobei der Haltebügel (8) mit etwa horizontal verlaufender Schwenkachse (10) an zwei gegenüberliegenden Seitenwänden (3, 4) des Ablagefachs (2) drehbar gelagert ist, **dadurch gekennzeichnet, dass** der Haltebügel (8) zwei gegenüberliegende Lagerzapfen (9) aufweist, die in nach oben offene Führungsschlitze (11) in den Seitenwänden (3, 4) eingesetzt sind.

2. Haltevorrichtung nach Anspruch 1, **dadurch gekennzeichnet, dass** in der Nichtgebrauchslage der Haltebügel (8) an einer der zwischen den Seitenwänden (3, 4) angeordneten Stirnwände (5) des Ablagefaches (2) im Wesentlichen anliegt.

3. Haltevorrichtung nach Anspruch 1 oder 2, **dadurch gekennzeichnet, dass** in der Nichtgebrauchslage der Haltebügel (8) im Wesentlichen die volle Grundfläche des Ablagefaches (2) freigibt.

4. Haltevorrichtung nach einem der vorhergehenden Ansprüche, **dadurch gekennzeichnet, dass** die Stirnwand (5) und/oder der Haltebügel (8) mit zumindest einem Krümmungsabschnitt (5a, 5b) zur Aufnahme kreissymmetrischer Getränkebehälter oder andere Gegenstände beliebiger Geometrie ausgeführt sind, und dass insbesondere Krümmungsabschnitte (5a, 5b) der Stirnwand (5) und des Haltebügels (8) in der Nichtgebrauchslage aneinander anliegen.

5. Haltevorrichtung nach einem der vorhergehenden Ansprüche, **dadurch gekennzeichnet, dass** zur Aufnahme zweier Getränkebehälter an der Stirnwand (5) und/oder an dem Haltebügel (8) zwei Krümmungsabschnitte (5a, 5b, 8a, 8b) ausgebildet sind, die durch einen planen Zwischenabschnitt (5c, 8c) unterteilt sind.

6. Haltevorrichtung nach einem der vorhergehenden Ansprüche, **dadurch gekennzeichnet, dass** die Lagerzapfen (9) mittels an den Seitenwänden (3, 4) angeordneter Schenkelfedern (12) gehalten sind.

7. Haltevorrichtung nach Anspruch 6, **dadurch gekennzeichnet, dass** an die Lagerzapfen (9) außerhalb der Seitenwände (3, 4) liegende Nockenscheiben (13) angeformt sind, die mit den Schenkelfedern (12) derart zusammenwirken, dass der Haltebügel (8) unter federnder Vorspannung in der Gebrauchslage und in der Nichtgebrauchslage arretiert ist.

8. Haltevorrichtung nach Anspruch 7, **dadurch gekennzeichnet, dass** die Nockenscheiben (13) der Lagerzapfen (9) jeweils zwei diametral gegenüberliegende Vorsprünge (13a) aufweisen, die mit korrespondierenden Vertiefungen (12b) in den die Nockenscheiben (13) umfassenden Schenkeln (12a) der Schenkelfedern (12) zusammenwirken.

9. Haltevorrichtung nach einem der Ansprüche 6, 7 oder 8, **dadurch gekennzeichnet, dass** die im Wesentlichen V-förmigen Schenkelfedern (12) an ihrem Basisabschnitt (12c) jeweils auf an die Seitenwände (3, 4) unterhalb der Führungsschlitze (11) angeformte, die Schenkelfedern (12) relativ zu den Führungsschlitzen (11) positionierende Vorsprünge (14) aufgesteckt sind.

## Claims

1. Retaining device, particularly for drink containers, which is arranged in a storage compartment (2) of the interior trim of a motor vehicle and which has a pivotably mounted retaining bracket (8) which can be displaced between a non-use position and a use position in which the retaining bracket (8) at least partially bounds a drink container compartment in the storage compartment (2), wherein the retaining bracket (8) is mounted rotatably with an approximately horizontally running pivot axis (10) on two opposite side walls (3, 4) of the storage compartment (2), **characterized in that** the retaining bracket (8) has two opposite journals (9) which are inserted into upwardly open guide slots (11) in the side walls (3, 4).

2. Retaining device according to Claim 1, **characterized in that**, in the non-use position, the retaining bracket (8) bears substantially against one of the end walls (5) of the storage compartment (2), which end walls are arranged between the side walls (3, 4).

3. Retaining device according to Claim 1 or 2, **characterized in that**, in the non-use position, the retaining bracket (8) substantially releases the full area of the storage compartment (2).

4. Retaining device according to one of the preceding claims, **characterized in that** the end wall (5) and/or the retaining bracket (8) are designed with at least one curved section (5a, 5b) for receiving circular-symmetrical drink containers or other objects of any geometry, and **in that** in particular the curved sections (5a, 5b) of the end wall (5) and of the retaining bracket (8) bear against one another in the non-use position.

5. Retaining device according to one of the preceding claims, **characterized in that** two curved sections (5a, 5b, 8a, 8b), which are divided by a planar intermediate section (5c, 8c), are formed on the side wall (5) and/or on the retaining bracket (8) in order to receive two drink containers.

6. Retaining device according to one of the preceding claims, **characterized in that** the journals (9) are held by means of leg springs (12) arranged on the side walls (3, 4).

7. Retaining device according to Claim 6, **characterized in that** cam disks (13) located outside the side walls (3, 4) are integrally formed on the journals (9) and interact with the leg springs (12) in such a manner that the retaining bracket (8) is locked in the use position and in the non-use position under resilient prestress.

8. Retaining device according to Claim 7, **characterized in that** the cam disks (13) of the journals (9) each have two diametrically opposite projections (13a) which interact with corresponding depressions (12b) in the legs (12a) of the leg springs (12), which legs surround the cam disks (13).

9. Retaining device according to one of Claims 6, 7 or 8, **characterized in that** the substantially V-shaped leg springs (12) are each plugged by means of the base section (12c) thereof onto projections (14) which are integrally formed on the side walls (3, 4) below the guide slots (11) and position the leg springs (12) relative to the guide slots (11).

## Revendications

1. Dispositif de retenue, notamment pour un récipient à boisson, qui est disposé dans une boîte à gants (2) de l'équipement intérieur d'un véhicule automobile et qui présente un étrier de retenue (8) monté de façon pivotante, qui est déplaçable entre une position de non-utilisation et une position d'utilisation, dans laquelle l'étrier de retenue (8) limite au moins partiellement un compartiment de récipient à boisson dans la boîte à gants (2), dans lequel l'étrier de retenue (8) est monté de façon rotative sur deux parois latérales opposées (3, 4) de la boîte à gants (2) au moyen d'un axe de pivotement (10) s'étendant environ horizontalement, **caractérisé en ce que** l'étrier de retenue (8) présente deux tourillons opposés (9), qui sont introduits dans des fentes de guidage (11) ouvertes vers le haut dans les parois latérales (3, 4).

2. Dispositif de retenue selon la revendication 1, **caractérisé en ce que**, dans la position de non-utilisation, l'étrier de retenue (8) s'applique essentiellement sur une paroi frontale (5) de la boîte à gants (2) disposée entre les parois latérales (3, 4).

3. Dispositif de retenue selon la revendication 1 ou 2, **caractérisé en ce que**, dans la position de non-utilisation, l'étrier de retenue (8) libère essentiellement toute la face de base de la boîte à gants (2).

4. Dispositif de retenue selon l'une quelconque des revendications précédentes, **caractérisé en ce que** la paroi frontale (5) et/ou l'étrier de retenue (8) est réalisé(e) avec au moins une partie courbe (5a, 5b) destinée à recevoir des récipients à boisson symétriques ronds ou d'autres objets de forme géométrique quelconque, et **en ce que** notamment des parties courbes (5a, 5b) de la paroi frontale (5) et de l'étrier de retenue (8) sont appliquées l'une sur l'autre dans la position de non-utilisation.

5. Dispositif de retenue selon l'une quelconque des revendications précédentes, **caractérisé en ce que** deux parties courbes (5a, 5b, 8a, 8b), qui sont séparées par une partie intermédiaire plane (5c, 8c), sont formées sur la paroi frontale (5) et/ou sur l'étrier de retenue (8) en vue de recevoir deux récipients à boisson.

6. Dispositif de retenue selon l'une quelconque des revendications précédentes, **caractérisé en ce que** les tourillons (9) sont maintenus au moyen de ressorts à branches (12) disposés sur les parois latérales (3, 4).

7. Dispositif de retenue selon la revendication 6, **caractérisé en ce que** des disques de came (13) situés à l'extérieur des parois latérales (3, 4) sont formés sur les tourillons (9), et coopèrent avec les ressorts à branches (12) de telle manière que l'étrier de retenue (8) soit calé dans la position d'utilisation et dans la position de non-utilisation sous la précontrainte des ressorts.

8. Dispositif de retenue selon la revendication 7, **caractérisé en ce que** les disques de came (13) des tourillons (9) présentent chacun deux saillies diamétralement opposées (13a), qui coopèrent avec des creux correspondants (12b) dans les branches (12a) des ressorts à branches (12) encadrant les disques de came (13).

9. Dispositif de retenue selon l'une quelconque des revendications 6, 7 ou 8, **caractérisé en ce que** les ressorts à branches (12) essentiellement en forme de V sont engagés à leur partie de base (12c) respectivement sur des saillies (14) formées sur les parois latérales (3, 4) en dessous de la fente de guidage (11) et positionnant les ressorts à branches (12) par rapport aux fentes de guidage (11).
